# EUROPÄISCHE PATENTSCHRIFT

(11) **EP 0 398 289 B1**
(45) Veröffentlichungstag und Bekanntmachung des Hinweises auf die Patenterteilung: **04.08.1993**
(21) Anmeldenummer: 90109236.1
(22) Anmeldetag: 16.05.1990
(51) Int. Cl.: B66B 7/12, F16N 31/02

(54) **Ölauffangtrichter für geschmierte, vertikale Führungsschienen**
Funnel-shaped oil tank for vertical, lubricated rails
Réservoir conique d'huile pour rail vertical et lubrifié

(30) Priorität: 17.05.1989 DE 3916058
(43) Veröffentlichungstag der Anmeldung: 22.11.1990
(73) Patentinhaber: Koudelka, Zdenek, D-63128 Dietzenbach (DE)
(72) Erfinder: Koudelka, Zdenek, D-63128 Dietzenbach (DE)

(56) Entgegenhaltungen:
- CH-A- 273 176
- GB-A- 3 693
- US-A- 1 486 774
- US-A- 1 957 715

## Beschreibung

Die Laufflächen bei Fahrstühlen benötigen eine permanente Schmierung mit Öl. Erfahrungsgemäß entsteht hierbei ein Verlust bis zu 0,20 Liter pro Schiene und Monat. Dieses Öl versickert bei herkömmlicher Verfahrensweise im Beton, bzw. im Erdreich. Somit ist das im Folgenden beschriebene Verfahren umweltfreundlich, fundamentschützend und kostengünstig.
Dieser Ölauffangtrichter 1 wird aus schlag- und ölfestem Kunststoff gefertigt.
Der Ölauffangtrichter 1 ist an der Seite zum Aufsetzen und Befestigen an der Schiene 3 geteilt und wird mit einer Klammer 2 an der Schiene 3 befestigt. Die Abdichtung 4 erfolgt mit ölfester Dichtmasse.
Der Ölauffangtrichter 1 hat von der Schiene 3 weg eine leichte Neigung, die ihren tiefsten Punkt an einer Öffnung 6 für einen Schlauchanschluß hat. Der hieran angeschlossene Schlauch 7 führt das aufgefangene Öl in einen dazugehörigen geschlossenen Behälter. Der Ölauffangtrichter 1 ist zum Schutze vor Verschmutzung und der damit verbundenen Verstopfungsgefahr des Auslaufes mit einer passenden Abdeckhaube 5 ausgerüstet.

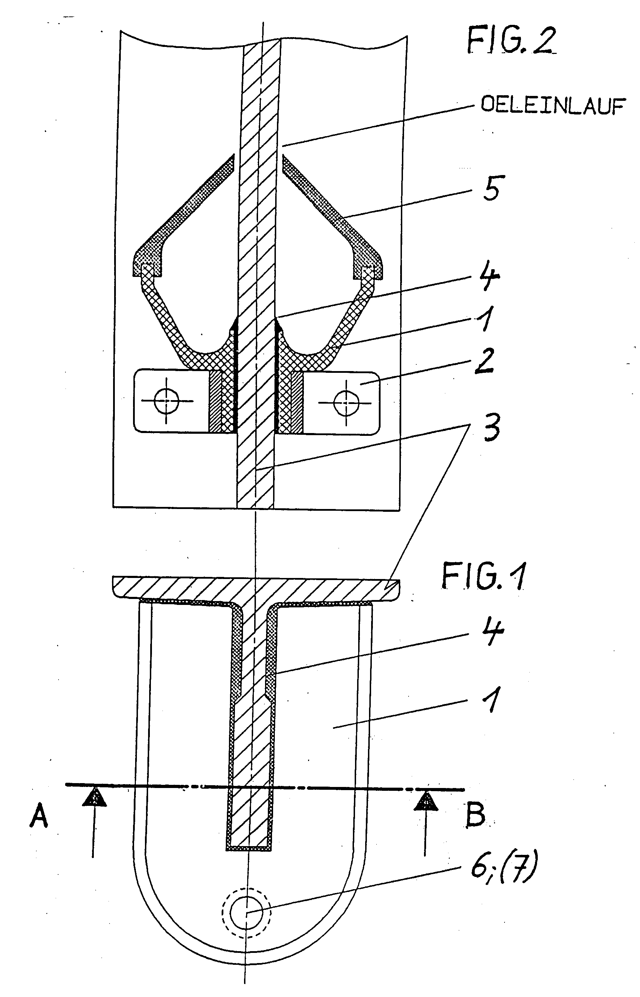

Zur Erläuterung der Erfindung sind Zeichnungen beigefügt, die ein Ausführungsbeispiel gemäß der Erfindung zeigen. Es zeigt: Fig.1 eine Draufsicht auf den Ölauffangtrichter und Fig.2 einen Schnitt A-B gemäß Fig.1.
Die Erfindung geht von dem Stand der Technik aus, den beispielsweise die US - PS 16 95 985 und die US- PS 1486 774 darstellen.
Die US- PS 16 95 985 bezieht sich auf eine Schmiervorrichtung für Aufzugschienen, die am Fahrkorb befestigt ist und die bei dessen unterer Endstellung in einen Ölbehälter taucht, um frisches Schmieröl aufzunehmen. Der Ölbehälter ist als oben offenes Gefäß beschrieben und nicht auf besondere Weise ausgebildet. Schon in der Aufgabenstellung weicht diese US- PS von der vorliegenden Erfindung ab. Ölbehälter für Aufzugschienen, die unterhalb der Schienen angeordnet sind und die sowohl der Schmierölaufbewahrung als auch dem Auffangen des an den Schienen herablaufenden Öles dienen, sind sebstverständlich bekannt. Hierbei handelt es sich jedoch um Ölbehälter, die einfach am unteren Ende der Führungsschienen aufgestellt sind. Eine Abdeckhaube kann bei solchen Einrichtungen auch nicht vorgesehen werden, weil die am Fahrkorb befestigte Schmiervorrichtung in den Ölbehälter eintauchen muß. So bezieht sich die US- PS 1695 985 auf die Ausgestaltung einer eintauchenden Schmiervorrichtung.

In der US- PS 1486 774 ist ein Ölauffangbehälter 8 beschrieben, der im wesentlichen trichterförmig ausgebildet ist, der eine schmutzabweisende Abdeckhaube 12 aufweist und der mittels einer Schraube 17 an einer Stange 7 (Führung) befestigt ist, wobei eine ölfeste, kreisringförmige Gummidichtung 16 zum Auffangen des Öls dient. Hierbei ist der Ölauffangbehälter 8 so ausgebildet, daß er an jeder, im Querschnitt kreisförmig ausgebildeten Führung angebracht werden kann.
Hierbei handelt es sich allerdings um einen Werkzeughalter (tool stock 5;6) im Bereich der Werkzeugmaschinen, der an einer runden Stange geführt hin- und herbewegt wird, wobei an beiden Enden des Weges des Werkzeughalters je ein Ölauffangbehälter mit nach innen umgestülpten Lippen angeordnet ist und zwar jeweils entgegengesetzt zueinander. Dies bedeutet, daß die Stange, von der Aufgabenstellung her, horizontal oder geneigt angeordnet sein muß, denn bei vertikaler Anordnung, wie dies bei Aufzugschienen der Fall ist, kann das an der Stange befindliche Öl nicht in den Ölauffangbehälter 8 gelangen.
Dem gegenüber können jedoch nicht Aufzugschienen vertikal frei stehend über größere Höhen hinweg ohne Wandbefestigung angebracht werden. Aus Gründen der Festigkeit und der Führung des Fahrkorbes sind nämlich Führungsschienen mit rechteckigem oder winkeligem Querschnitt erforderlich, wobei Teile des Querschnitts auch kreisförmig oder gekrümmt ausgebildet sein können. Maßgebend hierbei ist, daß die Aufzugschienen auf einer Seite an der Wand des Aufzugschachtes befestigt ist und nicht frei im Raum steht. Um das an diesen üblichen Aufzugschienen herablaufende Schmieröl aufzufangen, sind demnach besondere Maßnahmen erforderlich.
Die vorliegende Erfindung geht von der Aufgabe aus, einen Ölauffangtrichter für Führungsschienen, insbesondere Aufzugschienen vorzuschlagen, der- auch im Rahmen der Nachrüstung- so ausgebildet ist, daß er an jeder, im wesentlichen vertikal angeordneten Führungsschiene mit beliebigem Querschnitt angebracht werden kann.
Zur Lösung dieser Aufgabe wird ein Ölauffangtrichter vorgeschlagen, der am unteren Ende von an sich im wesentlichen vertikal verlaufenden Führungsschienen angebracht werden kann und der dadurch gekennzeichnet ist, daß er mit einer, dem Querschnitt der Führungsschiene angepassten Abdeckhaube versehen ist, die an der, der Führungsschiene zugekehrten Seite geteilt ist, einen von der Führungsschiene weg geneigten Boden aufweist mit einer, an dessen unterstem Punkt angeordneter Öl- Auslauföffnung versehen ist und mit einer ölresistenten Dichtmasse gegen die Führungsschiene abgedichtet ist, wobei dieser Ölauffangtrichter mittels eines bekannten Befestigungselementes, z.B. einer Klammer an der Führungsschiene befestigt werden kann.

## Patentansprüche

1. Ölauffangtrichter für geschmierte, vertikale Führungsschienen, insbesondere Aufzugschienen, der jeweils am unteren Ende dieser Schienen befestigt ist, die vorwiegend rechteckigen oder winkligen Querschnitt aufweisen, dadurch gekennzeichnet,
daß er an der, der Schiene (3) zugekehrten Seite geteilt ist, daß er mit einer gegen Schmieröl resistenten Abdichtung (4) gegen die Oberfläche der Schiene (3) abgedichtet ist,
daß er mit einer, dem Querschnitt der Schiene (3) entsprechenden, zur Schiene (3) hin einen Spalt freilassenden Abdeckhaube (5) und einem, von der Schiene (3) weg geneigten, Boden versehen ist, der an seinem tiefsten Punkt eine Öffnung (6) aufweist und
daß die Abdichtung (4) im geneigten Boden den gesamten Zwischenraum zwischen einer Bodenaussparung und der Oberfläche der Schiene (3) ausfüllt.

2. Ölauffangtrichter nach Anspruch 1, dadurch gekennzeichnet, daß er aus schlagfestem, ölresistenten Kunststoff besteht.

3. Ölauffangtrichter nach Anspruch 1 und 2, dadurch gekennzeichnet, daß er am unteren Ende der Schiene (3) mittels einer Klammer (2) an der Schiene (3) befestigbar ist.

4. Ölauffangtrichter nach den Ansprüchen 1,2 und 3, dadurch gekennzeichnet, daß an der Öffnung (6) ein Schlauch (7) anschließbar ist, der in einen Behälter mündet.

## Claims

1. Oil collecting funnel for lubricated, vertical guide rails, in particular lift rails, which is secured to each lower end of these rails, which mostly have a rectangular or angular cross section, characterised in that it is divided on the side which faces the rail (3), that it is sealed off from the surface of the rail (3) by a seal (4), which is resistant to lubricating oil, that it is provided with a covering hood (5), which corresponds to the cross section of the rail (3) and leaves a gap towards the rail (3), and with a bottom which is inclined away from the rail (3) and comprises an opening (6) at its lowest point, and that the seal (4) in the inclined bottom fills the entire space between a recess in the bottom and the surface of the rail (3).

2. Oil collecting funnel according to claim 1, characterised in that it consists of a shockproof, oil-resistant plastic.

3. Oil collecting funnel according to claims 1 and 2, characterised in that it can be secured to the rail (3) at the lower end of the latter by means of a clamp (2).

4. Oil collecting funnel according to claims 1, 2 and 3, characterised in that a flexible tube (7), which leads into a receptacle, can be attached to the opening (6).

## Revendications

1. Cône collecteur d'huile pour rails de guidage verticaux lubrifiés, notamment rails d'ascenseurs, qui est chaque fois fixé à l'extrémité inférieure de ces rails qui présentent principalement une section rectangulaire ou angulaire, **caractérisé** en ce qu'il est divisé sur le côté tourné vers le rail (3), en ce qu'il est étanché vis-à-vis de la surface du rail (3) par un agent d'étanchéification (4) résistant à l'huile de lubrification, en ce qu'il est pourvu d'un capot de recouvrement (5) correspondant à la section du rail (3) et laissant libre une fente vers le rail (3), et d'un fond incliné en éloignement du rail (3) et présentant une ouverture (6) en son point le plus bas,
et en ce que l'agent d'étanchéification (4) remplit, dans le fond incliné, la totalité de l'espace intermédiaire entre un évidement du fond et la surface du rail (3).

2. Cône collecteur d'huile selon la revendication 1, **caractérisé** en ce qu'il est réalisé en matière plastique résistant aux chocs et à l'huile.

3. Cône collecteur d'huile selon la revendication 1 ou 2, **caractérisé** en ce qu'il est fixé sur le rail (3), à l'extrémité inférieure du rail (3), au moyen d'une bride de fixation (2).

4. Cône collecteur d'huile selon la revendication 1, 2 ou 3, **caractérisé** en ce qu'un tuyau souple (7), qui débouche dans un récipient, peut être raccordé à l'ouverture (6).
